# EUROPEAN PATENT APPLICATION

(11) **EP 4 796 474 A1**
(43) Date of publication of application: **26.08.2026**
(21) Application number: 26160432.6
(22) Date of filing: 24.02.2026
(51) Int. Cl.: B65H 3/10, B65H 1/08, B65H 1/30, B65H 3/16, B65H 3/20, B65H 15/00, B65H 3/44

(54) **APPARATUS FOR HANDLING SHEET ELECTRODES, AND METHOD OF HANDLING SHEET ELECTRODES**

(30) Priority: 25.02.2025 IT 202500003759
(71) Applicant: G.D S.p.A., 40133 Bologna (BO) (IT)
(72) Inventor: MONTEMURRO, Salvatore, Bologna BO (IT); VILLA, Stefano, Bologna BO (IT); FORTINI, Massimo, Bologna BO (IT); LANZARINI, Luca, Bologna BO (IT)
(74) Representative: Pietri, Simona

(57) **Abstract**

The present invention relates to an apparatus for handling a sheet electrode, which is to say, to a method for handling an electrode, depending on its sequential feeding for downstream processing, typically the manufacture of an electrochemical cell or of a semi-finished electrochemical cell product.

## Description

The present invention relates to an apparatus for handling a sheet electrode, which is to say, to a method for handling an electrode, depending on its sequential feeding for downstream processing, typically the manufacture of an electrochemical cell or of a semi-finished electrochemical cell product.

An electrochemical cell is a device capable of converting chemical energy into electrical energy (and/or vice versa), such as galvanic cells, both primary and secondary, capacitors (including supercapacitors), fuel cells, or electrolytic cells. The present invention finds a preferred, though not exclusive, application in the field of electrochemical cell production for the manufacture of secondary electric batteries, also known as rechargeable batteries, which can be charged and discharged multiple times.

In particular, the present invention is intended for use in the production of electrochemical cells comprising an alternating and stacked plurality of positive and negative electrodes, generally rectangular in shape, with an interposed separation layer of dielectric material, so-called prismatic cells.

The sheet electrode has a substantially flat shape. Sheet electrodes are herein used to refer to, for example, single electrode plates, pouch-type electrodes, or electrode plates coated with at least one separator layer. In general, sheet electrode refers to any type of electrode that has a substantially plate-like shape and defines two opposite planar faces.

In the cell, the electrodes are stacked on top of one another by superimposition on said planar faces.

The electrode moreover presents a protuberance ("*tab*") which is aimed to define an electrical connection of the electrochemical cell.

Depending on the shape and positioning of the tab, the electrode can have its own intrinsic asymmetry, therefore, in a stack of electrodes, each of these electrodes must be arranged in the same orientation in order to have the tabs superimposing in a regular alignment.

It is the experience of the Applicant that common apparatuses for the manufacture of prismatic electrochemical cells comprise at least one electrode supply magazine, a conveyor belt that carries the electrode to a workstation such as, for example, a cell assembly station, and one or more manipulators, which pick up the electrodes from the at least one magazine and place them on the conveyor belt. An example of the assembly station is described in patent application WO2024/074998. A known apparatus of this type for handling a sheet electrode is also disclosed by pe KR20250071917.

The electrodes inside the single magazine can be arranged in a non-orderly manner or in a stack, not necessarily in an orderly fashion.

The manipulator must therefore not only pick up the electrode and carry it to the belt but, in some cases, must also move it in space with one or more axial rotations to arrange it on the belt according to a desired orientation, which is functional to the creation of the cell.

The term "orientation" in this specific case refers to the arrangement of the electrode with one face exposed, both on the magazine and on the belt. In greater detail, if the electrode defines a first face and a second face opposite to the first, placing itself in support on the second face - thereby exposing the first face - the orientation of the electrode assumes a first orientation. Otherwise, placing itself in support on the first face and exposing the second, the electrode assumes a second orientation. This applies, for example, both as regards the arrangement in the magazine as well as on the conveyor belt.

The Applicant noted that this type of solutions, which is widely used, presents quite a few problems.

First of all, picking up the electrode from the magazine with a manipulator is not error-free. For example, when the electrode is supplied inside the magazine in a stack, picking up the first electrode can cause the electrode underneath to also move or for the two electrodes to rub against one another; in this case, the risk of damaging the electrode underneath is high.

Once again, the Applicant noted that to efficiently pick up the electrode from the magazine and carry it to the belt, the manipulator takes a significant amount of time which impacts the overall speed of cell manufacture.

This intrinsic slowness of the system is further increased if the manipulator is also required to move the electrode in space according to axial rotations to arrange it on the conveyor belt in an orientation different from the one wherein it was picked up.

The Applicant has also noted that increasing the speed of the manipulator to reduce working times entails a significant risk both of damage to the electrode when being gripped as well as an increase of errors in orientation or, more simply, positioning on the belt.

Moreover, it is the experience of the Applicant that the manipulator requires adequate maneuvering space, therefore the distance between the electrode magazine and the conveyor belt is not negligible, affecting both working times and the precision with which the electrode is positioned.

In order to overcome some of these problems, the Applicant is aware that solutions with multiple manipulators have been developed in the state of the art. If, on the one hand, this type of solutions appear to speed up the electrode supply times to the belt, on the other hand the overall configuration of the apparatus is decidedly complex from a technical point of view, and the space required for moving the manipulators and positioning the magazines is significantly increased.

An apparatus and method for handling sheet electrodes which, according to the present invention, achieve all of the tasks listed above and have the essential features set forth in the attached independent claims. Other significant features are the subject of the dependent claims.

Conceptually, the invention contemplates providing an apparatus for handling a sheet electrode, preferably comprising at least one electrode gripping station, fed in sequence with electrodes.

Preferably, the apparatus is configured for the manufacture of an electrochemical cell or a semi-finished electrochemical cell product.

Preferably, the apparatus moreover comprises an electrode releasing station comprising a conveyor belt configured with an electrode releasing plane movable according to a direction of transport of the electrodes.

Preferably, the gripping means are arranged between said gripping station and said releasing station, and are configured to individually pick up an electrode from said at least one gripping station and release it onto said releasing plane of said releasing station.

Moreover, the gripping means preferably comprise a support that rotates about a first axis of rotation parallel to said releasing plane and orthogonal to said direction of transport, controlled by drive means about for driving the rotation about said first axis of rotation, whereby the gripping and releasing occur in two successive steps of the rotation of said support that rotates about said first axis of rotation.

Preferably, a plurality of gripping roller elements are distributed in an orderly fashion on the periphery of said rotatable support, wherein said roller elements are rotatable about own second axis of rotation, parallel to said first axis of rotation and integral with respective attachments movable with respect to said rotatable support; wherein said roller elements comprise at least one cylindrical surface sector provided with reversible means for retaining the electrode and are controlled by drive means for driving the rotation about the first axis of rotation.

Accordingly, the gripping roller elements are configured to grip each electrode by means of a rolling motion of said cylindrical surface sector on a plane of said electrode at said gripping station; and to release said electrode on said releasing plane by tangential detachment from said cylindrical surface sector.

According to one aspect of the invention, the movable attachments are preferably pivotally movable about respective hinge axes in turn parallel to said first and said second axes of rotation.

According to a further aspect of the invention, the drive means of said support and said gripping roller elements are preferably configured to impart to the rotation of said roller elements, when gripping each electrode in said at least one gripping station using said rolling motion by said cylindrical surface sector, a tangential motion locally consistent with said direction of transport, and a translational motion of said second axes of rotation discordant with said direction of transport.

The apparatus can also preferably provide that said gripping roller elements are able to cooperate sequentially in tangency with said releasing plane, and wherein the direction of rotation of said gripping roller elements is able to impart to said cylindrical surface sector a tangential motion at said releasing station locally consistent with said direction of transport, whereby said cylindrical surface sectors of said gripping roller elements are able to release said electrode by direct tangential cooperation with said movable releasing plane of said conveyor belt.

The apparatus can comprise at least two gripping stations, wherein said attachments and/or said gripping stations are configured for selective gripping from only one of said stations, by a single gripping roller element, for each single revolution of said support.

According to another aspect of the invention, the apparatus preferably provides that the gripping roller elements are adapted to cooperate sequentially in tangency with said releasing plane, wherein said apparatus moreover comprises in said releasing station a releasing roller element rotatable about an own axis of rotation which is in turn parallel to said first and said second axes of rotation and comprises at least one cylindrical surface sector provided with its own reversible electrode retaining means. The releasing roller element is moreover preferably able to cooperate tangentially with a single one of said gripping roller elements and with said releasing plane of said belt, it being configured for an act of tangential motion locally consistent with said direction of transport and to be selectively switched between an activation and deactivation setting of the gripping of the electrode by its own retaining means. The drive means of said gripping roller elements are then preferably configured to reverse the direction of rotation at least in proximity of said releasing station when said releasing roller element is switched to said activation setting, whereby said cylindrical surface sector is able to release the electrode directly onto said releasing plane in a first orientation if said releasing roller element is switched to said deactivation setting, and to release the electrode firstly to said releasing roller element and from there to said releasing plane in a second orientation reversed with respect to said first orientation if said releasing roller element is switched to said activation setting.

In a different aspect of the invention, said drive means of said support and of said gripping roller elements are also preferably configured to impart to the rotation of said roller elements, when gripping each electrode in said at least one gripping station using said rolling motion by said cylindrical surface sector, a tangential motion locally discordant with said direction of transport, and a translational motion of said second axes of rotation consistent with said direction of transport.

Preferably, said releasing station provides a releasing roller element rotating about an own axis of rotation which is in turn parallel to said first and said second axes of rotation and comprising at least one cylindrical surface sector provided with its own reversible means for retaining the electrode, wherein said releasing roller element is moreover able to cooperate tangentially with said releasing plane of said belt, wherein said releasing roller element is configured for a tangential motion locally consistent with said direction of transport, wherein said gripping roller elements are able to cooperate sequentially in tangency with said releasing roller element, whereby said gripping roller element is able to release the electrode, firstly to said releasing roller element and from there to said releasing plane.

The apparatus according to this aspect can therefore in turn preferably comprise at least two gripping stations, wherein said attachments and/or said gripping stations are configured for the selective gripping from only one of said stations, by a single gripping roller element, for each single rotation of said support.

The gripping stations preferably comprise stacked electrode magazines.

Preferably, said magazines are movable towards or away from said rotatable support.

At least said drive means of said support and of said gripping roller elements are preferably independent or independently controlled.

Preferably, the apparatus comprises actuating means configured to control the motion of said movable attachments.

Preferably, the retaining means comprise suction means.

In a method of handling a sheet electrode for the manufacture of an electrochemical cell or a semi-finished electrochemical cell product according to the invention, it is therefore provided to individually pick up an electrode from at least one gripping station and release it on an electrode releasing plane movable according to a direction of transport of the electrodes, by means of gripping means preferably comprising a support rotatable about a first axis of rotation parallel to said releasing plane and orthogonal to said direction of transport, brought into rotation about said first axis of rotation, wherein the gripping and releasing take place in two successive steps of the rotation of said rotatable support about said first axis of rotation. Preferably, a plurality of gripping roller elements is distributed in an orderly fashion on the periphery of said rotatable support, wherein said roller elements are rotatable about own second axes of rotation, parallel to said first axis of rotation and integral to respective attachments movable with respect to said rotatable support; wherein said roller elements comprise at least one cylindrical surface sector exercising a reversible retention of the electrode.

Preferably, according to the method, said gripping roller elements pick up each electrode by means of a rolling motion of said cylindrical surface sector on a plane of said electrode in said gripping station and they release it on said releasing plane by tangential detachment from said cylindrical surface sector.

According to one aspect, in said rolling motion when gripping an electrode, said roller elements rotate with a tangential motion locally consistent with said direction of transport, wherein said second axes of rotation are translated due to the effect of the rotation of said support in a translation motion discordant with said direction of transport.

Preferably, the gripping roller elements cooperate sequentially in tangency with said releasing plane, and said cylindrical surface sector carries out a tangential motion on said releasing plane locally consistent with said direction of transport, wherein said cylindrical surface sectors of said gripping roller elements release said electrode due to direct tangential cooperation with said movable releasing plane (XY) of said conveyor belt.

In one aspect of the invention, wherein a single gripping roller element, for each single rotation of said support selectively picks up an electrode from one of a plurality of said gripping stations.

In another aspect of the invention, the gripping roller elements cooperate sequentially in tangency with said releasing plane, being moreover provided a releasing roller element rotatable about an own axis of rotation which is in turn parallel to said first and said second axes of rotation and comprising at least one cylindrical surface sector which exerts a reversible retention of the electrode, said releasing roller element cooperating moreover tangentially to a single one of said gripping roller elements and with said releasing plane of said belt, carrying out on said releasing plane a tangential motion locally consistent with said direction of transport, wherein the method provides for selectively switching said releasing roller element between an activation and deactivation setting of the retention on the electrode, and for reversing the direction of rotation of said gripping roller elements at least in proximity of said releasing plane when said releasing roller element is switched to said activation setting, whereby said cylindrical surface sector releases the electrode directly onto said releasing plane in a first orientation if said releasing roller element is switched to said deactivation setting, and releases the electrode firstly to said releasing roller element and from there to said releasing plane in a second orientation flipped relative to said first orientation if said releasing roller element is switched to said activation setting.

According to a different aspect, in said rolling motion when gripping an electrode, said roller elements rotate with a tangential motion locally discordant with said direction of transport, wherein said second axes of rotation are translated due to the effect of the rotation of said support in a translation motion consistent with said direction of transport.

Preferably, a releasing roller element can be provided, once again rotatable about an own axis of rotation, which is in turn parallel to said first and said second axes of rotation and comprising at least one cylindrical surface sector which exerts a reversible retention of the electrode, wherein said releasing roller element moreover cooperates tangentially with said releasing plane of said belt, carrying out on said releasing plane a tangential motion locally consistent with said direction of transport, wherein said gripping roller elements sequentially in tangency cooperate with said releasing roller element, releasing the electrode firstly on said releasing roller element, with the electrode being then released by this on said releasing plane.

The method according to this aspect can therefore in turn precede that a single gripping roller element, for each single rotation of said support, selectively picks up an electrode from one of a plurality of said gripping stations.

Preferably, it is provided to independently control at least the rotation of said support and the rotation of said gripping roller elements.

The electrodes are preferably retained on said cylindrical surface sector by applying suction.

Preferably, the released electrode is moved in the direction of transport and stacked on a stacking table of an assembly station.

The apparatus and method of the present invention allow the electrodes to be handled in sequential feed to the downstream transport with great production speed and reliability. The rolling grip avoids the risk of drawing multiple sheets at the same time due to the friction generated between the sheets. In certain aspects of the invention it is also possible to select the orientation wherein the electrodes are released, either by selecting the grip from multiple gripping stations, or by selective flipping of the electrodes from a single gripping station.

The features and advantages of the apparatus and method according to the present invention will be more clearly elucidated below in the description of its embodiments, in a non-limiting manner, with reference to the attached drawings, wherein:
- Fig. 1 is a schematic perspective view of an electrode gripping phase in the apparatus and method according to the invention;
- Fig. 2 is a lateral view of the apparatus according to a first aspect of the invention, wherein the associated Fig. 2a and Fig. 2b show sheet electrodes, viewed from one side, handled by respective magazines of the apparatus of Fig. 2;
- Fig. 3 is a lateral view of the apparatus in a second aspect of the invention;
- Fig. 4 schematically shows a sheet electrode seen from one face;
- Fig. 5 is a lateral view of the apparatus in a third aspect of the invention;
- Fig. 6a through Fig. 6d schematically represent successive phases of the method that can be carried out with the apparatus in Fig. 5.

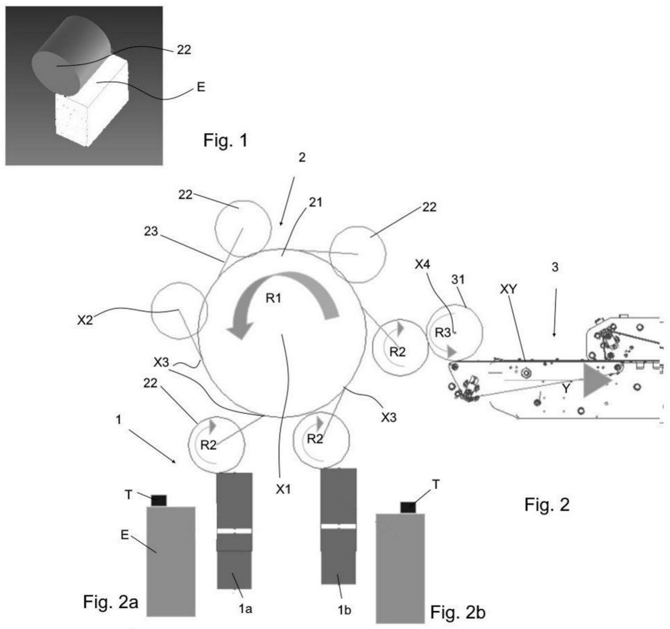

With reference to said figures, starting from a first aspect of the invention and with reference to Fig. 1, Fig. 2, Fig. 2a and Fig. 2b, the apparatus comprises a releasing station 3 of the electrodes E with a conveyor belt configured with a releasing plane XY of the electrodes movable according to a direction Y of transport of the electrodes

Electrode gripping means 2 comprise a support 21 rotatable about a first axis of rotation X1 parallel to the releasing plane XY and orthogonal to the direction of transport Y. The rotatable support 21 is controlled by drive means for driving rotation about the first axis of rotation X1, which are not shown, whereby the gripping and releasing occur in two successive steps of the rotation of the support 21 about the first axis of rotation X1.

The gripping takes place in a gripping station 1, of which in this case there are two, providing two magazines 1a and 1b of sheet electrodes stacked and placed side by side, for example, by means of respective hoppers, wherein inside each magazine the sheet electrodes have a homogeneous orientation , that differs from magazine to magazine, which is to say, as can be seen from Fig. 2a and Fig. 2b, for example, wherein in magazine A all electrodes have one face turned upwards and wherein in magazine B they have the opposite face turned upwards, wherein the two faces are differentiated by the position of the electrical contact protuberance (so-called *tab*)*.* The electrode arrangement plane in the gripping station can preferably be parallel to the releasing plane XY, but more generally a condition of parallelism with respect to the first axis of rotation X1 is sufficient.

Once again with reference to the support 21, a plurality of gripping roller elements 22 is distributed in an orderly fashion on its periphery, the roller elements being rotatable about own second axes of rotation X2, parallel to the first axis of rotation X1 and integral with respective attachments 23 which are movable with respect to said rotatable support. Preferably, the attachments, for example in the form of arms, are pivotally movable about respective hinge axes X3 in turn parallel to the first and said second axes of rotation X1, X2, and can be either passive or associated with actuating means configured to control their pivoting motion.

The roller elements 22, for example, proper rollers with complete circular cylindrical development, comprise at least one cylindrical surface sector provided with reversible means for retaining the electrode, for example, suction means, and are controlled by drive means for driving the rotation about the respective second axes of rotation X2.

The gripping roller elements 22 are configured in this manner to grip each electrode E by means of a rolling motion of the cylindrical surface sector on the electrode, which is to say, on its plane in the gripping station, and to release the electrode on the releasing station by tangential detachment from the cylindrical surface sector that gripped and retained it.

As regards the gripping, the electrode is picked up by the gripping means without any creep. The gripping means indeed pick up the electrode from the gripping station with a purely rotational movement made up of two motion components, a rotation component about the axis of rotation X2 and a translation component about a direction of translation Z1 in turn parallel to the releasing plane XY. Once again in this embodiment, said motion composition is achieved, for example, by configuring the rotatable support 21 and the gripping roller elements 22 with discordant directions of rotation; specifically, the direction of rotation R1 is counterclockwise and the direction of rotation R2 of the gripping rollers 22 is counterclockwise. In practice, in this case, when gripping each electrode in the gripping station with the rolling motion of the cylindrical surface sector, a tangential motion is generated for the gripping roller element 22 which is locally discordant with respect to the direction of transport Y, whereas the translational motion according to the direction Z1 is consistent with that of the direction of transport Y.

If two or more gripping stations are provided, as in the example shown, it is advantageous to provide that the rollers 22 selectively grip one or the other stacked electrode station, so as to choose a desired orientation for the electrode to be released. The differentiation of the gripping input can be carried out in various ways, for example, by activating and deactivating the suction in a timed manner, or by controlling the movements of the hoppers, in which case they are made movable when moving towards or moving away from the rotatable support, or by controlling the pivoting movement of the movable attachments 23.

Turning to the release, in this case it is not directed on the XY plane since the direction of rotation R2 would not allow the appropriate interaction with the motion of the belt and therefore of the XY movable plane. A releasing roller element 31 is therefore provided, rotating about an own axis of rotation X4 which is in turn parallel to the first and second axes of rotation X1, X2 and comprising at least one cylindrical surface sector provided with its own reversible means for retaining the electrode. The releasing roller element 31 is moreover able to cooperate tangentially with the releasing plane XY, being configured with a direction of rotation R3 able to carry out a tangential motion locally consistent with the direction of transport Y. The gripping roller elements 22 are then able to cooperate sequentially in tangency, one after the other following the rotation of the rotatable support 2, to the releasing roller element 31, whereby each gripping roller element releases the electrode firstly to the releasing roller element 31 and from there the electrode is released with the appropriate motion on the releasing plane XY.

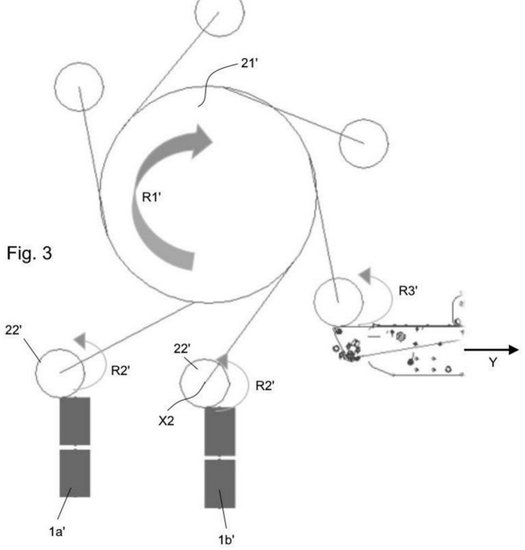

With reference now to Fig. 3, an apparatus according to a different aspect of the invention differs from the one just described only in the different configuration of the directions of rotation of the support 2' and the gripping rollers 22'. In this case the direction R1' of rotation of the former is clockwise and the direction R2' of rotation of the latter is counterclockwise. When gripping each electrode, the rolling motion generated by the said cylindrical surface sector implies a tangential motion locally consistent with the direction of transport Y, and a translational motion discordant with respect to the same direction of transport Y, so much so that the electrodes are fed in the direction of the releasing station by firstly moving away from it and then reaching it from above. In this case, the direction of rotation of the gripping rollers 22' is furthermore already compatible with that required for involvement with the belt for unloading purposes, whereby unloading occurs through direct interaction between the gripping rollers and the belt, without the need to resort to additional releasing rollers.

For all other aspects, the descriptive considerations already developed for the preceding embodiment are applicable to this solution in Fig. 3.

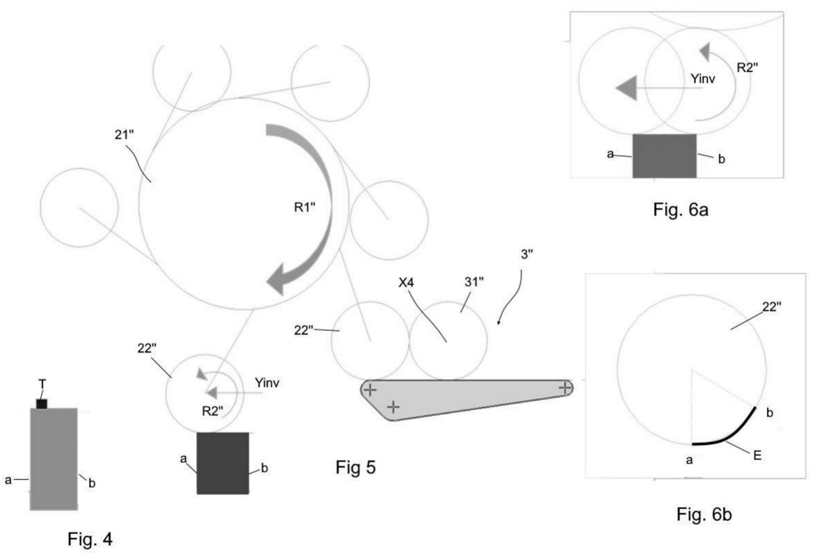

Turning now to the apparatus shown in Fig. 4 through Fig. 6d, to which reference is now made, and always avoiding newly describing elements obviously borrowed from the preceding embodiments, in common with the second one (that of Fig. 3) this embodiment shares the kinematics of the rotatable support 21" and of the gripping rollers 22", as shown here in a more explicit graphic manner by Fig. 6a, as regards the direction of the motion of the gripping roller and its translation, this figure indicating the direction of translation Yinv discordant with Y, and the counterclockwise direction of rotation R2".

In this case, however, the pick up from a single gripping station, and the possibility of selectively unloading the electrode, on the releasing plane XY, either in the same orientation wherein it was picked up, or in a flipped orientation, is provided. In this regard, for greater clarity, two opposite lateral edges of an electrode E are indicated with a and b in Fig. 4, wherein the edge a is, for example, the one closest to the tab T, the edge b the one furthest away, wherein it is clear that a certain order of advancement (the reference is, for example, the direction of transport Y), which is to say, with the edge b preceding edge a, is representative of a certain (first) orientation, and vice versa the opposite order is representative of the flipped orientation; in other words, the two orientations correspond to one or the other of the two faces of the electrode turned towards the gripping means at the pick-up station.

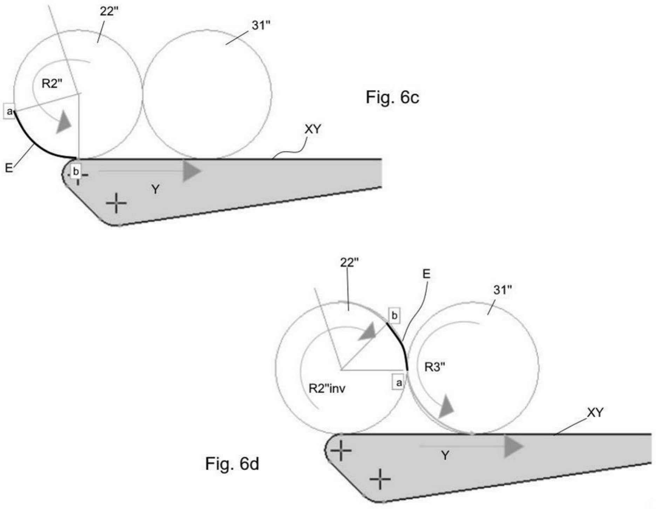

In this embodiment, the gripping roller elements 22" are again able to cooperate sequentially in tangency with the releasing plane XY to operate a direct unloading, as seen for the second embodiment. The electrode E that the gripping roller element 22" has picked up is brought towards the releasing plane in the condition of Fig. 6b. Fig. 6c shows how the direction of rotation R2" with which the gripping was carried out by the gripping roller, counterclockwise, maintained also during the releasing phase, appropriately releases the electrode directly by tangential cooperation with the belt. Unloading will thus take place with a (first) orientation that is always consistent with the initial one (edge b is always at the front or most advanced in the direction of transport).

However, a releasing roller element 31" is provided which is rotatable about an own axis of rotation X4 which is in turn parallel to the first and second axes of rotation X1, X2. Just as in the case of the releasing roller 31 of the first embodiment, it comprises at least one cylindrical surface sector provided with its own reversible means for retaining the electrode. Here, however, the releasing roller 31" is able to cooperate tangentially both with each single gripping roller element 22" that presents itself at the releasing phase, and with the releasing plane XY being configured with own direction of rotation R3" for a tangential motion locally consistent with the direction of transport.

The releasing roller 31" is moreover configured to be selectively switched between an activation and deactivation setting of the gripping of the electrode E by the own retaining means. This switching can occur following the activation or deactivation of the retaining means, for example, pneumatic means, or even following an alternating movement of the roller axis. Moreover, by means of suitably configured drive means, the gripping roller elements can reverse the direction of rotation at least in proximity of the releasing station, when the releasing roller element is switched to the activation position.

Fig. 6d represents this latter situation, with the releasing roller 21" having reversed its direction of rotation, now clockwise, and necessarily releasing the electrode firstly to the releasing roller element 31" switched to the activation setting, and from there to the releasing plane XY, in a second orientation which is flipped with respect to the first orientation. Indeed, it can be seen from the figure how, due to the effect of the reversed direction of rotation R2"ᵢₙᵥ for the releasing roller, the edge a is now at the front; since this direction would no longer be compatible for direct unloading onto the belt, the two rollers are swapped and therefore the release is made by the releasing roller 31" which has a direction of rotation (counterclockwise) compatible with the tangential involvement of unloading onto the belt.

It is therefore evident that with the releasing roller element 31" switched to activation, and a simultaneous reversal of the direction of rotation of the gripping roller element, a releasing of the electrode on the XY plane is obtained, in a second orientation which is flipped with respect to that which is obtained in the different switching (deactivation) and with the direction of rotation R2 which remains that of the gripping phase. Therefore, by selecting between the two available operating modes, it is possible to selectively choose the orientation wherein the electrode is released, which can be used, for example, to selectively flipped electrodes that have a nonhomogeneous orientation in the magazine, to arrange them all with the same orientation, or, starting from a homogeneous magazine, to selectively flip batches based on different downstream processing needs.

The releasing roller element is subservient to own actuating means.

In all the presented embodiments, the apparatus can be followed by an assembly or stacking station (not shown in the figures), positioned downstream of the releasing plane XY which comprises a stacking plane, where the positive and negative electrodes are deposited alternatingly to form an electrochemical cell or a semi-finished electrochemical cell product.

The attributions of parallelism and orthogonality used in this description are to be understood as net of variations in a range of + or - 5 degrees from the ideal value. The term direction must be understood as oriented direction, which is to say, as a vector with a direction.

Roller elements are understood to be actual full-length rollers, either regular or irregular, or angular sectors or portions of rollers that are incomplete in length.

The present invention has been described up to this point with reference to its preferred embodiments. It is understood that other embodiments can exist which relate to the same inventive core, all falling within the scope of protection of the following claims.

## Claims

1. Apparatus for handling a sheet electrode, comprising:
- at least one electrode gripping station (1), fed in sequence with electrodes;
- an electrode releasing station (3) comprising a conveyor belt comprising an electrode releasing plane (XY) movable according to a direction (Y) of transport of the electrodes;
- gripping means (2) are arranged between said gripping station (1) and said releasing station (3), and are configured to individually pick up an electrode from said at least one gripping station (1) and release it onto said releasing plane (XY) of said releasing station (3);
wherein
said gripping means (2) comprise:
a support (21) that rotates about a first axis of rotation (X1) parallel to said releasing plane (XY) and orthogonal to said direction of transport (Y), controlled by drive means for driving the rotation about said first axis of rotation (X1), whereby the gripping and releasing occur in two successive steps of the rotation of said support (21) that rotates about said first axis of rotation (X1).
a plurality of gripping roller elements (22, 22', 22") distributed in an orderly fashion on the periphery of said rotatable support (21), wherein said roller elements (22, 22', 22") are rotatable about own second axes of rotation (X2), parallel to said first axis of rotation (X1) and integral with respective attachments (23) movable with respect to said rotatable support (21); wherein said roller elements (22, 22', 22") comprise at least one cylindrical surface sector provided with reversible means for retaining the electrode and are controlled by drive means for driving the rotation about the respective second axes of rotation (X2).
whereby
said gripping roller elements (22, 22', 22") are configured to grip each electrode by means of a rolling motion of said cylindrical surface sector on a plane of said electrode at said gripping station; and to release said electrode on said releasing plane (XY) by tangential detachment from said cylindrical surface sector.

2. Apparatus according to claim 1, wherein said movable attachments (23) are pivotally movable about respective hinge axes (X3) in turn parallel to said first and said second axes of rotation (X1, X2).

3. Apparatus according to claim 1 or claim 2, wherein said drive means of said support (21) and said gripping roller elements (22, 22', 22") are configured to impart to the rotation of said roller elements (22, 22', 22"), when gripping each electrode in said at least one gripping station (1) using said rolling motion by said cylindrical surface sector, a tangential motion locally consistent with said direction of transport (Y), and a translational motion of said second axes of rotation (X2) discordant with said direction of transport (Y).

4. Apparatus according to claim 1 or claim 2, wherein said drive means of said support (21) and of said gripping roller elements (22, 22', 22") are also preferably configured to impart to the rotation of said roller elements (22, 22', 22"), when gripping each electrode in said at least one gripping station (1) using said rolling motion by said cylindrical surface sector, a tangential motion locally discordant with said direction of transport (Y), and a translational motion of said second axes of rotation (X2) consistent with said direction of transport (Y).

5. Apparatus according to claim 3, wherein said gripping roller elements (22, 22', 22") are able to cooperate sequentially in tangency with said releasing plane (XY), and wherein the direction of rotation (R2) of said gripping roller elements (22, 22', 22") is able to impart to said cylindrical surface sector a tangential motion at said releasing station (3) locally consistent with said direction of transport (Y), whereby said cylindrical surface sectors of said gripping roller elements (22, 22', 22") are able to release said electrode by direct tangential cooperation with said movable releasing plane (XY) of said conveyor belt.

6. Apparatus according to claim 5, wherein gripping roller elements (22, 22', 22") are able to cooperate sequentially in tangency with said releasing plane (XY), said apparatus moreover comprising in said releasing station (3) a releasing roller element (31, 31', 31") rotatable about an own axis of rotation (X4) which is in turn parallel to said first and said second axes of rotation (X1, X2) and comprising at least one cylindrical surface sector provided with its own reversible electrode retaining means, wherein said releasing roller element (31, 31', 31") is moreover able to cooperate tangentially with a single of said gripping roller elements (22, 22', 22") and with said releasing plane (XY) of said belt, being configured for tangential motion locally consistent with said direction of transport (Y) and to be selectively switched between an activation and deactivation setting of the gripping of the electrode by its own retaining means, wherein said drive means of said gripping roller elements (22, 22', 22") are configured to reverse the direction of rotation at least in proximity of the releasing station (3) when said releasing roller element (31, 31', 31") is switched to said activation setting, whereby said cylindrical surface sector is able to release the electrode directly onto said releasing plane (XY) in a first orientation if said releasing element (31, 31', 31") is switched to said deactivation setting, and to release the electrode firstly to said releasing roller element (31, 31', 31") and from this to said releasing plane (XY) in a second orientation flipped with respect to said first orientation if said releasing roller element (31, 31', 31") is switched to said activation setting.

7. Apparatus according to claim 4, comprising in said releasing station (3) a releasing roller element (31, 31', 31") rotating about an own axis of rotation (X4) which is in turn parallel to said first and said second axes of rotation (X1, X2) and comprising at least one cylindrical surface sector provided with its own reversible means for retaining the electrode, wherein said releasing roller element (31, 31', 31") is moreover able to cooperate tangentially with said releasing plane (XY) of said belt, wherein said releasing roller element (31, 31', 31") is configured for a tangential motion locally consistent with said direction of transport (Y), wherein said gripping roller elements (22, 22', 22") are able to cooperate sequentially in tangency with said releasing roller element (31, 31', 31"), whereby said gripping roller element (22) is able to release the electrode, firstly to said releasing roller element (31, 31', 31") and from there to said releasing plane (XY).

8. Apparatus according to any one of the preceding claims, wherein at least one of said drive means of said rotatable support (21) and of rotation of said gripping roller elements (22, 22', 22") are independent or independently controlled.

9. Method of handling a sheet electrode for the manufacture of an electrochemical cell or a semi-finished electrochemical cell product, wherein the method provides for individually picking up an electrode from at least one gripping station and releasing it on a releasing plane (XY) of the electrode movable according to a direction of transport (Y) of the electrodes, by means of gripping means comprising:
a support rotatable about a first axis of rotation (X1) parallel to said releasing plane (XY) and orthogonal to said direction of transport (Y), brought into rotation about said first axis of rotation (X1), wherein the gripping and releasing take place in two successive steps of the rotation of said rotatable support about said first axis of rotation (X1).
a plurality of gripping roller elements (22, 22', 22") distributed in an orderly fashion on the periphery of said rotatable support, wherein said roller elements (22, 22', 22") are rotatable about own second axes of rotation, (X2), parallel to said first axis of rotation (X1) and integral to respective attachments movable with respect to said rotatable support; wherein said roller elements comprise at least one cylindrical surface sector exercising a reversible retention of the electrode.
wherein
said gripping roller elements (22, 22', 22") pick up said electrode by means of a rolling motion of said cylindrical surface sector on a plane of said electrode in said gripping station and wherein they release it on said releasing plane (XY) by tangential detachment from said cylindrical surface sector.

10. Method according to claim 9, wherein in said rolling motion when gripping an electrode, said roller elements rotate with a tangential motion locally consistent with said direction of transport, wherein said second axes of rotation (X2) are translated due to the effect of the rotation of said support in a translation motion discordant with said direction of transport (Y).

11. Method according to claim 9, wherein in said rolling motion when gripping an electrode, said roller elements rotate with a tangential motion locally discordant with said direction of transport, wherein said second axes of rotation (X2) are translated due to the effect of the rotation of said support in a translation motion consistent with said direction of transport (Y).

12. Method according to claim 10, wherein said gripping roller elements (22, 22', 22") cooperate sequentially in tangency with said releasing plane (XY), and wherein said cylindrical surface sector carries out a tangential motion on said releasing plane (XY) locally consistent with said direction of transport (Y), wherein said cylindrical surface sectors of said gripping roller elements release said electrode due to direct tangential cooperation with said movable releasing plane (XY) of said conveyor belt.

13. Method according to claim 12, wherein a single gripping roller element (22, 22', 22"), for each single rotation of said support selectively picks up an electrode from one of a plurality of said gripping stations (1a', 1b').

14. Method according to claim 11, wherein a releasing roller element (31') is provided, rotatable about an own axis of rotation (X4), which is in turn parallel to said first and said second axes of rotation (X1, X2) and comprising at least one cylindrical surface sector which exerts a reversible retention of the electrode, wherein said releasing roller element (31, 31', 31") moreover cooperates tangentially with said releasing plane (XY) of said belt, carrying out on said releasing plane (XY) a tangential motion locally consistent with said direction of transport (Y), wherein said gripping roller elements (22, 22', 22") sequentially in tangency cooperate with said releasing roller element (31'), releasing the electrode firstly on said releasing roller element (31, 31', 31"), with the electrode being then released by this on said releasing plane (XY).

15. Method according to claim 14, wherein a single gripping roller element (22, 22', 22"), for each single rotation (1a', 1b') of said support selectively picks up an electrode from one of a plurality of said gripping stations.

16. Method according to any one of claim 9 through claim 15, wherein it is moreover provided to move said released electrode according to said direction of transport Y and to stack it on a stacking plane of an assembly station.
